# EUROPÄISCHE PATENTSCHRIFT

(11) **EP 1 573 876 B1**
(45) Veröffentlichungstag und Bekanntmachung des Hinweises auf die Patenterteilung: **28.06.2006**
(21) Anmeldenummer: 03782124.6
(22) Anmeldetag: 03.12.2003
(51) Int. Cl.: H02G 5/02

(54) **SAMMELSCHIENENANORDNUNG**
BUSBAR ASSEMBLY
SYSTEME BARRE BUS

(30) Priorität: 20.12.2002 DE 10261836
(43) Veröffentlichungstag der Anmeldung: 14.09.2005
(73) Patentinhaber: SIEMENS AKTIENGESELLSCHAFT, 80333 München (DE)
(72) Erfinder: BÜSSERT, Stephan, 04277 Leipzig (DE); HAAS, Volker, 06804 Muldenstein (DE); SCHMIDT, Mario, 04178 Leipzig (DE); ZICKMANTEL, Mathias, 04329 Leipzig (DE)
(86) Internationale Anmeldenummer: PCT/DE2003/004001
(87) Internationale Veröffentlichungsnummer: WO 2004/059810

(56) Entgegenhaltungen:
- GB-A- 1 268 074
- US-A- 3 813 635

## Beschreibung

Die Erfindung betrifft eine Sammelschienenanordnung
- mit zumindest einer ersten Sammelschiene, die zumindest eine erste Teil-Schienen und eine zweite Teil-Schiene aufweist,
- mit zumindest einem Sammelschienenhalter, der eine Anlagefläche aufweist, an der die erste Teil-Schiene mittels eines ersten Befestigungsmittels gehalten ist und
- mit zumindest einem zweiten Befestigungsmittel zum Befestigen der zweiten Teil-Schiene an der ersten Teil-Schiene.

Eine derartige Sammelschienenanordnung ist beispielsweise aus dem Handbuch 30 der Rittal GmbH & Co. KG, Herborn, 04/01 P005 bekannt. - Bei dieser bekannten Sammelschienenanordnung hält der Sammelschienenhalter die erste Teil-Schiene in Längsrichtung der Sammelschiene neben der Befestigungsstelle der als Verbindungsschiene ausgebildeten zweiten Teil-Schiene an der ersten Teilschiene. Zum Verbinden der Teil-Schienen der Sammelschiene und zum Halten der Sammelschiene ist entsprechend viel Bauraum in Längsrichtung der Sammelschiene erforderlich.

Auch aus der Druckschrift DE-19 106 49 ist eine Sammelschienenanordnung bekannt, bei der ein Sammelschienenhalter die Sammelschiene neben der Befestigungsstelle zweier Teil-Schienen der Sammelschiene hält.

Ausgehend von einer Sammelschienenanordnung mit den Merkmalen des Oberbegriffes des Anspruches 1 (Handbuch 30 der Rittal GmbH & Co. KG, Herborn, 04/01 P005) liegt der Erfindung die Aufgabe den zur für die Sammelschienenanordnung erforderlichen Bauraum zu optimieren.

Diese Aufgabe wird erfindungsgemäß dadurch gelöst, dass in der Anlagefläche des Sammelschienenhalters zumindest eine Vertiefung zur Aufnahme des zweiten Befestigungsmittels vorgesehen ist. - Bei einer derartigen Ausgestaltung der Sammelschienenanordnung wird die Sammelschiene im Bereich der Verbindungsstelle ihrer Teil-Schienen gehalten, so dass der erforderliche Bauraum in Längsrichtung der Sammelschiene verringert ist.

Eine bevorzugte Ausgestaltung der neuen Sammelschienenanordnung sieht vor, dass die Tiefe der Vertiefungen derart bemessen ist, dass das jeweils zugeordnete zweite Befestigungsmittel zwischen dem Boden der Vertiefung und der ersten Teil-Schiene verliersicher gehalten ist. - Auf ein manuelles Sichern dieses Befestigungsmittels kann somit bei Montagearbeiten verzichtet werden. Durch die Verliersicherheit des Befestigungsmittels ist zugleich sichergestellt, dass es zu keinem Kurzschluss aufgrund eines verlorenen, heruntergefallenen Befestigungsmittels in der Schaltanlage kommen kann.

Eine weitere bevorzugte Ausgestaltung der neuen Sammelschienenanordnung sieht vor, dass die Vertiefungen in Richtung der Längsachse des Sammelschienenhalters spiegelsymmetrisch angeordnet sind. - Bei einer derartigen Ausgestaltung kann jeder der Sammelschienenhalter sowohl auf der rechten als auch auf der Linken Seite und sowohl im oberen Teil als auch im unteren Teil eines Gerüstes eines Schaltfeldes befestigt bzw. nachgerüstet werden.

Um bei der Herstellung der Sammelschienenhalter Material zu sparen können im Bereich zwischen den Vertiefungen Materialverjüngungen vorgesehen sein.

Vorteilhaft ist es, wenn an dem Sammelschienenhalter zumindest die ersten Teil-Schienen einer ersten und einer zweiten Sammelschiene befestigbar sind, wobei der Sammelschienenhalter und die ersten Teil-Schienen mit ersten Ausnehmungen derart versehen sind, das sie die Befestigung der ersten Teil-Schienen an dem Sammelschienenhalter bei unterschiedlichen lichten Weiten zwischen den Sammelschienen erlauben. - Wenn man auch bei dieser Ausgestaltung vorsieht, dass die Ausnehmungen in Richtung der Längsachse des Sammelschienenhalters spiegelsymmetrisch angeordnet sind, kann der Sammelschienenhalter weiterhin sowohl auf der rechten als auch auf der Linken Seite und sowohl im oberen Teil als auch im unteren Teil eines Gerüstes eines Schaltfeldes befestigt bzw. nachgerüstet werden.

Die Erfindung wird im Folgenden anhand der in den Figuren 1 bis 10 dargestellten Ausführungsbeispiele näher erläutert. Dabei zeigen:
Figur 1: den oberen Teil eines Gerüstes eines Schaltfeldes einer Schaltanlage mit einer daran angeordneten ersten Ausführungsform der Sammelschienenanordnung, die eine erste lichte Weite zwischen den Sammelschienen aufweist,
Figur 2: den unteren Teil eines gemäß der Figur 1 ausgebildeten Gerüstes mit einer daran angeordneten zweiten Ausführungsform der Sammelschienenanordnung,
Figur 3: einen Sammelschienenhalter,
Figuren 4 und 5: einen Ausschnitt aus der Figur 1,
Figuren 6 und 7: einen Ausschnitt aus der Figur 2,
Figur 8: den oberen Teil eines gemäß der Figuren 1 bzw. 2 ausgebildeten Gerüstes mit einer dritten Ausführungsform der Sammelschienenanordnung, die eine zweite lichte Weite zwischen den Sammelschienen aufweist, und mit einer Anordnung zum Störlichtbogenschutz der Sammelschienenanordnung, und
Figuren 9 und 10: zwei Sammelschienen einer vierten Ausführungsform der Sammelschienenanordnung jeweils mit einer Störlichtbogen-Elektrode.

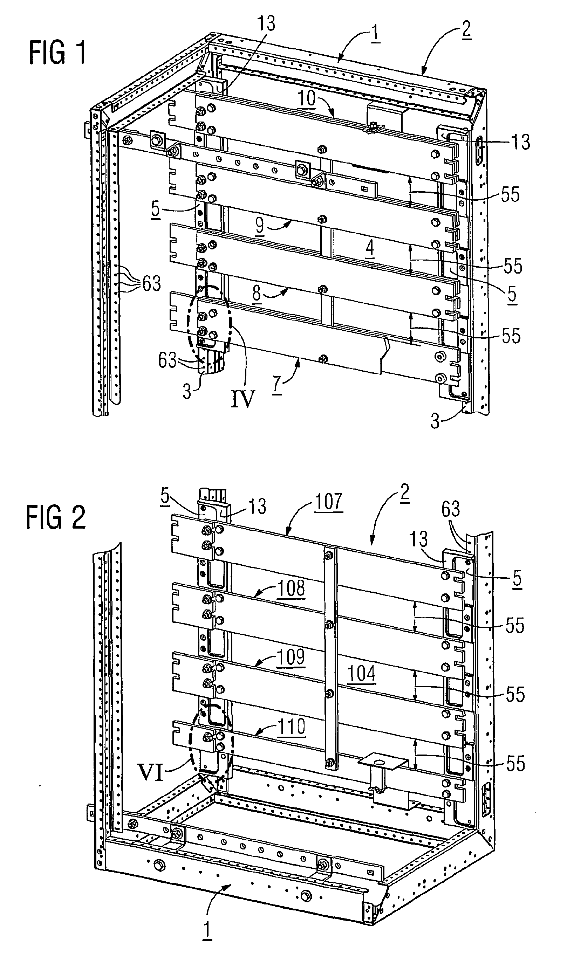

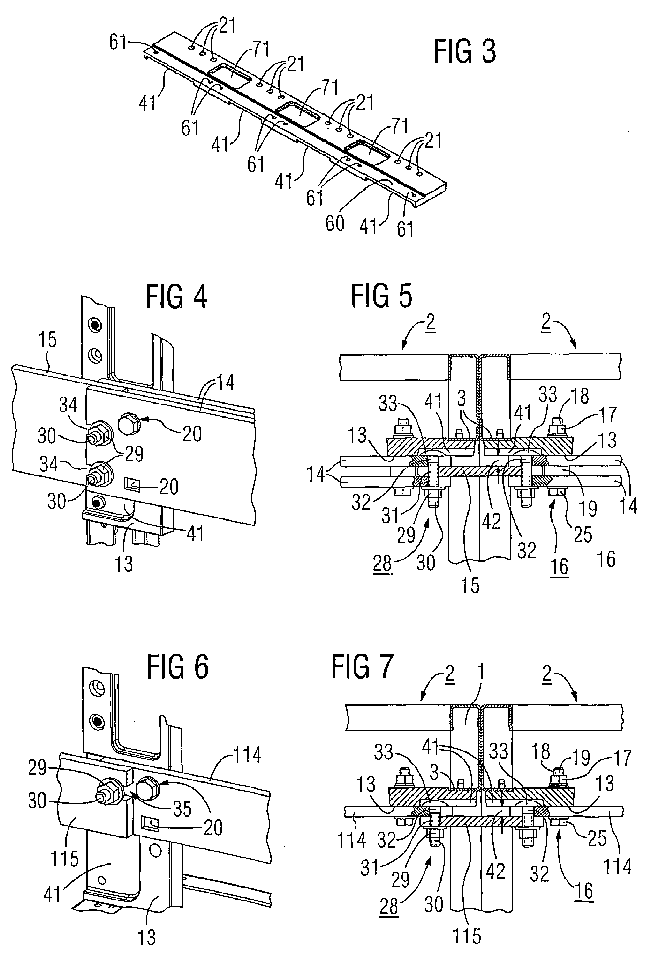

In den Figuren 1, 2 und 8 ist das Gerüst 1 eines Schaltfeldes 2 einer Schaltanlage gezeigt. Mehrere derartige Schaltfelder 2 können gemäß der Figuren 5, 7 und 10 nebeneinander angeordnet und miteinander verbunden werden. Abgewinkelte Kanten 3 des Gerüstes 2 dienen zur Befestigung von Sammelschienenanordnungen, die sowohl im oberen als auch im unteren Teil des Gerüstes und dabei spiegelsymmetrisch zur Mitte des Gerüstes angeordnet sein können.

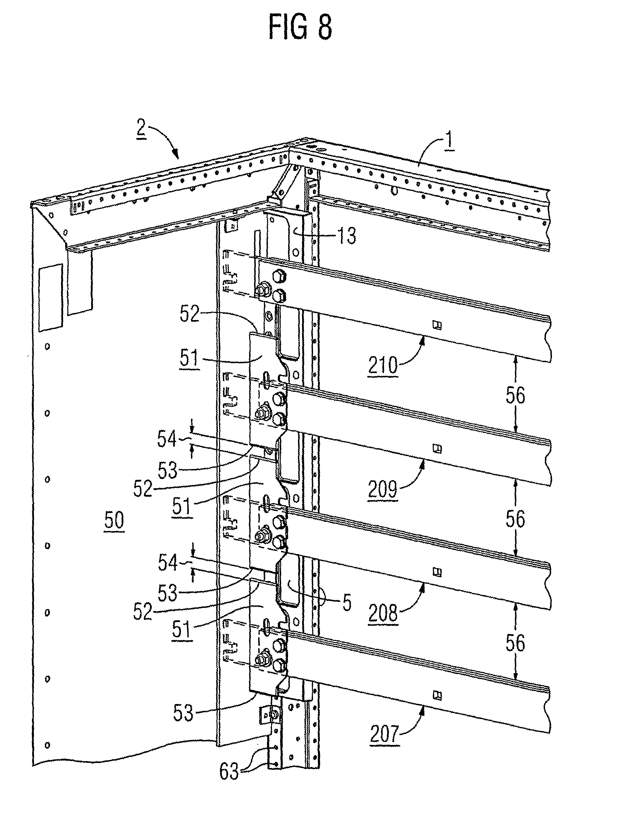

So zeigt die Figur 1 eine erste Ausführungsform 4 der Sammelschienenanordnung, die im oberen Teil des Gerüstes angeordnet ist. Figur 2 zeigt eine zweite Ausführungsform 104 der Sammelschienenanordnung, die im unteren Teil des Gerüstes Angeordnet ist. Eine dritte Ausführungsform der Sammelschienenanordnung 204, die wie die erste Ausführungsform 4 im oberen Teil des Gerüstes angeordnet, ist in Figur 8 gezeigt.

Jede der Ausführungsformen der Sammelschienenanordnung weist jeweils vier parallel zueinander verlaufende Sammelschienen 7, 8, 9, 10; 107, 108, 109, 110; 207, 208, 209, 210 und zwei Sammelschienenhalter 5 auf. Die erste und die zweite Ausführungsform 4; 104 der Sammelschienenanordnung weisen eine erste lichte Weite 55 zwischen den Sammelschienen 7, 8, 9, 10; 107, 108, 109, 110 und die dritte Ausführungsform weist eine von der ersten lichten Weite 55 verschiedene, zweite lichte Weite 56 zwischen den Sammelschienen 207, 208, 209, 210 auf. Eine erste, eine zweite und eine dritte der Sammelschienen 7, 8, 9; 107, 108, 109; 207, 208, 209 sind Phasenleiter, während die vierte der Sammelschienen 10; 110; 210 ein Neutralleiter (N-Leiter ist), der mit dem Gerüst 1 stromleitend verbunden sein kann (PEN-Leiter). Es ist bekannt, dass sich durch das gemeinsame Führen des Neutralleiters mit den Phasenleitern im Falle einer Unsymmetrie im elektrischen Netz, bei der auch der Neutralleiter vom Strom durchflossen wird, ein geringes elektromagnetisches Feld ergibt, so dass nur geringe Arbeitsströme über das Gerüst fließen.

Jede der Sammelschienen weist gemäß der Figuren 1, 2 und 8 zumindest eine an einer Anlagefläche 13 des Sammelschienehalters 5 anliegende erste Teil-Schiene 14; 114; 214 und eine zweite Teil-Schiene auf. Die erste Teil-Schiene 15; 115; 215 erstreckt sich im wesentlichen über die gesamte Breite des Schaltfeldes 2. Die zweite Teil-Schiene ist eine Verbindungsschiene, die sich von dem einen Schaltfeld zu einem in den Figur 5, 7 und 10 gezeigten weiteren Schaltfeld erstreckt. Die Enden der ersten Teil-Schienen sind über erste Befestigungsmittel 16 an den Sammelschienenhaltern 5 befestigt. Hierzu sind die ersten Befestigungsmittel 16 als mit Muttern 17 versehene Schrauben 18 ausgebildet, wobei der Schaft 19 der Schrauben 18 erste Ausnehmungen 20, 21 der ersten Teil-Schienen 14; 114; 214 und des Sammelschienenhalters 5 durchgreift. Der Schraubenkopf 25 ist an der von dem Sammelschienenhalter5 abgewandten Seite 26 der ersten Teil-Schienen 14; 114; 214 abgestützt, während die Mutter 17 an der der abgewinkelten Kante des Gerüstes zugewandten Seite 27 des Sammelschienenhalters 5 abgestützt ist. Jede der zweiten Teil-Schienen 15; 115; 215 ist über zweite Befestigungsmittel 28 an der zugeordneten ersten Teil-Schienen 14; 114; 214 befestigt. Hierzu sind die zweiten Befestigungsmittel 28 als mit Muttern 29 versehene Schlossschrauben 30 ausgebildet, deren Schaft 31 das zugeordnete Ende der ersten Teil-Schiene 14; 114; 214 und das zugeordnete Ende der zweiten Teil-Schiene 15; 115; 215 im Bereich zweiter Ausnehmungen 34, 35 durchgreift. Die Mutter 29 ist dabei gemäß der Figuren 1 und 8 bei Verwendung einer weiteren erster Teil-Schienen 14; 114; 214 pro Sammelschiene an der weiteren ersten Teil-Schiene 14; 114; 214 oder bei nur einer ersten Teil-Schiene an der zweiten Teil-Schiene 15; 115; 215 abgestützt. Der Schraubenkopf 31 ist an der an dem Sammelschienenhalter anliegenden ersten Teil-Schiene abgestützt.

Gemäß der Figuren 4 und 5 bzw. 6 und 7 weisen die ersten Ausnehmungen 20 der ersten Teil-Schienen 14; 114; 214 zum Toleranzausgleich einen quadratischen Querschnitt auf, der größer bemessen ist als die an den Außendurchmesser der Schraube 18 angepasste erste Ausnehmung 21 des Sammelschienenhalters 5. Die zweiten Ausnehmungen 34, 35 der ersten 14, 114, 214 und der zweiten Teil-Schienen 15, 115, 215 sind als in Richtung der zugewandten freien Enden offene Langlöcher derart ausgebildet, dass die ersten Teil-Schienen 14; 114; 214 und die zweite Teil-Schiene 15; 115; 215 aus entgegengesetzten Richtungen seitlich auf den Schaft der zugeordneten Schlossschraube 30 aufgeschoben werden können. Der Sammelschienenhalter 5 weist den ersten Teil-Schienen 14; 114; 214 gegenüberliegende, benachbart den Anlageflächen 13 für die Sammelschiene angeordnete, einseitig offene Vertiefungen 41 auf, in denen der Schraubenkopf 33 der Schlossschrauben 30 aufgenommen ist. Durch sie einseitig offene Gestaltung der Vertiefungen 41 kann die Verbindungsschiene mit der Schlossschraube 30 bei am Gerüst befestigtem Sammelschienenhalter 5 durch seitliches Einschieben des Schraubenkopfes 33 in die Vertiefung 41 leicht nachgerüstet werden. Dabei ist die Tiefe 42 der Vertiefungen 41 so bemessen, dass ein Herausrutschen der Schlossschraube 30 aus den zweiten Ausnehmungen 34, 35 sicher verhindert ist. Die Schlossschrauben weisen einen sich an den Schraubenkopf anschließende, als Vierkant 32 ausgebildeten Abschnitt des Schaftes 31 auf, der in dem einem der Langlöcher 34 verdrehsicher gehalten ist. Zum Befestigen der zweiten Teil-Schiene an der ersten Teil-Schiene ist es somit nicht erforderlich das zweite Befestigungsmittel 28 manuell gegen Verlieren oder Verdrehen zu sichern.

Jede der Ausführungsformen 4, 104, 204, 304 der Sammelschienenanordnung kann mit einer Anordnung 50 zum Störlichtbogenschutz versehen werden.

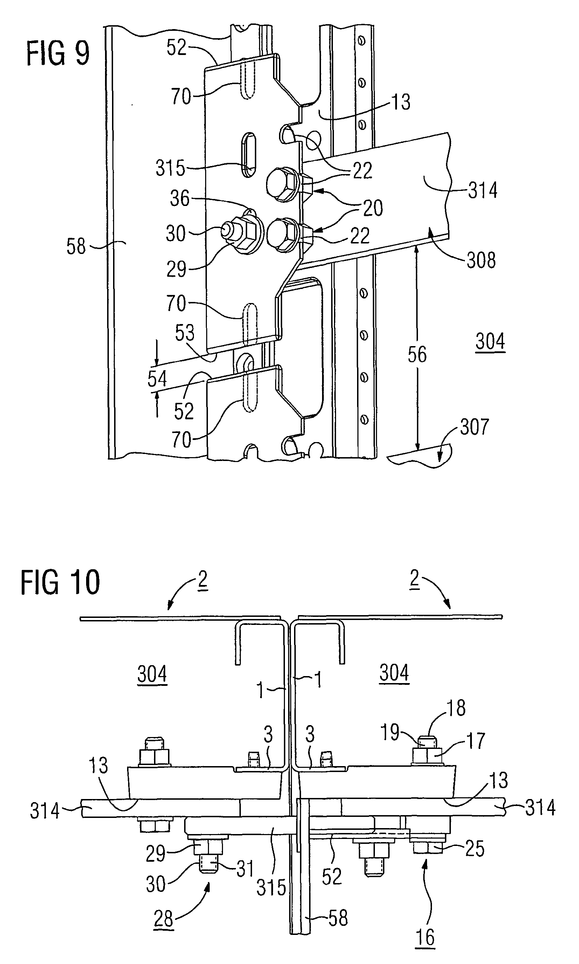

Diese Anordnung 50 weist gemäß der Figur 8 drei Störlichtbogen-Elektroden 51 auf, von denen jeweils eine mittels der ersten 16 und der zweiten 28 Befestigungsmittel an den drei Phasenleitern befestigt ist. Auch der N-Leiter bzw. PEN-Leiter kann mit einer Störlichtbogen-Elektrode 51 versehen werden. Die Störlichtbogen-Elektroden sind als Metallblechteil aus Stahl ausgebildet, die eine höhere Schmelzwärme gegenüber den aus Kupfer bestehenden Sammelschienen 7, 8, 9, 10; 107, 108, 109, 110; 207, 208, 209, 210 aufweisen. Sie weisen gemäß den Figuren 9 und 10 jeweils eine erste und eine zweite durch Falzen doppellagig gestaltete Kante 52, 53 auf. Diese Störlichtbogen-Elektroden sind so angeordnet, dass sich jeweils zwischen zwei benachbarten Sammelschienen die erste Kante 52 der an der einen Sammelschiene 207; 407 befestigten Störlichtbogenelektrode und die zweite Kante der an der anderen Sammelschiene befestigten Störlichtbogen-Elektrode derart mit einer lichten Weite 54, die größer als die lichte Weite 55, 56 zwischen den Stromschienen ist, gegenüberstehen, dass bei einem Kurzschluss der beiden Stromschienen der entstehende, sich in einer Laufrichtung 57 entlang der Längsachse der Stromschienen fortbewegende Lichtbogen zwischen der ersten 52 und der zweiten Kante 53 brennt. An diesen Kanten findet der Lichtbogen in Verbindung mit einer Isolierwand 58 ideale Brennbedingungen und bleibt dort stehen. Eine weitere Zerstörung der Schaltanlage, insbesondere die Zerstörung eines benachbarten Schaltfeldes sind somit sicher verhindert. Da die lichte Weite 54 zwischen den gegenüberliegenden Kanten 52, 53 der Störlichtbogen-Elektroden 51 kleiner als die lichte Weite 55, 56 zwischen den Sammelschienen ist, findet der Abbrand an den Störlichtbogen-Elektroden statt. Damit ist sichergestellt, dass nach dem Auftreten eines Lichtbogens, insbesondere bei kurzer Brenndauer, die Sammelschienen nicht zerstört und daher nicht ersetzt zu werden brauchen. Die Störlichtbogen-Elektroden sind nur im Falle des Auftretens eines Störlichtbogens vom Strom durchflossen, so dass eine Registrierung des Störlichtbogens - beispielsweise über eine Luftspule und einen Wandler - und eine Auswertung des Störlichtbogensbeispielsweise die Abschaltung der Einspeisung des Stromesmöglich sind.

Zur Führung des Lichtbogens in Richtung der Kanten 52, 53, die parallel zur Mittelachse der Stromschienen verlaufen, können Leitelemente in Form von Materialkanten 70 vorgesehen sein, die in Figur 9 mit gestrichelten Linien dargestellt sind. Die Materialkanten können beispielsweise Kanten von Schlitzen Nuten, Ausprägungen oder zusätzlich aufgebrachten, vorzugsweise scharfkantigen Elementen sein.

Zur Befestigung der Störlichtbogen-Elektroden 51 an den Stromschienen weisen die Störlichtbogen-Elektroden 51 den ersten Ausnehmungen der Stromschienen und des Sammelschienenhalters zugeordnete erste Ausnehmungen 22 und den zweiten Ausnehmungen 34, 35 der Sammelschienen zugeordnete zweite Ausnehmungen 36 auf.

Gemäß der Figur 10 wird ein Weiterlaufen des Lichtbogens auf der Sammelschiene in das benachbarte Schaltfeld zusätzlich dadurch verhindert, dass in der Laufrichtung 57 des Lichtbogens hinter den Störlichtbogen-Elektroden 51 die Isolierwand 58 aus einer Hartmatte angeordnet ist. Diese Hartmatte liegt an den Störlichtbogen-Elektroden an. Durch dieses Anliegen werden zum Einen die durch das Brennen des Lichtbogens entstehenden ionisierten, elektrisch hoch leitenden Gase aufgehalten und abgekühlt. Zum Anderen wird sichergestellt, dass der Lichtbogen an der Sammelschiene nicht neu zünden kann. Da sie zusätzlich die Luftstrecke zu geerdeten Teilen vergrößert, ist auch ein Neuzündungen des Lichtbogens an diesen geerdeten Teilen sicher vermieden. Die Hartmatte trägt auch zur Reduzierung der durch den Abbrand entstehen Verschmutzung im benachbarten Schaltfeld bei.

Gemäß der Figur 3 ist zur Positionierung der Sammelschienenhalter 5 an der jeweiligen abgewinkelten Kante 3 des Gerüstes 1 eine weitere Vertiefung 60 im Bereich dritter Ausnehmungen 61 des Sammelschienenhalters 5 vorgesehen. Die dritten Ausnehmungen 61 wirken mit dritten Befestigungsmitteln 62 zusammenwirken, die zum Befestigen der Sammelschienenhalter 5 an den abgewinkelten Kanten 3 des Gerüstes 1 dienen. Der Abstand der dritten Ausnehmungen 61 ist dabei an das Raster einer Lochung 63 der abgewinkelten Kanten 3 angepasst. Weiterhin sind Materialverjüngungen 71 zur Materialeinsparung vorgesehen.

Gemäß der Figur 3 sind an jedem der Sammelschienenhalter 5 vier mal drei also zwölf erste Ausnehmungen 21 und vier Vertiefungen 41 auf der den Sammelschienen zugewandten Seite vorgesehen. Diese ersten Ausnehmungen 21 und diese Vertiefungen 41 sind in Längsrichtung des Sammelschienenhalters spiegelsymmetrisch derart angeordnet, dass alle Sammelschienenhalter gleich ausgebildet und insbesondere jeder dieser gleich ausgebildeten Sammelschienenhalter sowohl an der linken Seite als auch - und zwar durch Drehung um 180° - an der rechten Seite des Gerüstes 1 angeordnet werden kann.

Die Störlichtbogen-Elektroden 51 sind insgesamt spiegelsymmetrisch und zwar zu einer Ebene, die parallel zu den beiden Kanten 52, 53 und senkrecht zur Flachseite der Sammelschienen verläuft.

Wie ein Vergleich der Figuren 1 bzw. 2 mit der Figur 8 verdeutlicht, sind die Anzahl und der gegenseitige Abstand der Ausnehmungen und der Vertiefungen der Sammelschienen und der Störlichtbogen-Elektroden so gewählt, dass die Sammelschienenhalter die Befestigung von unterschiedlich breiten Sammelschienen und damit die Befestigung von Sammelschienen bei unterschiedlichen lichten Weiten 55, 56 zwischen den Sammelschienen erlauben und dass auch die gleich ausgebildeten Störlichtbogen-Elektroden 51 für den Störlichtbogenschutz der unterschiedlichen Ausführungsformen 4, 104, 204 der Sammelschienenanordnung verwendbar und leicht nachrüstbar sind. Die Sammelschienen-Mittelachsenabstände sind dabei bei allen Ausführungsformen 4, 104, 204, 304 der Sammelschienenanordnung gleich.

## Patentansprüche

1. Sammelschienenanordnung (4; 104; 204; 304),
- mit zumindest einer ersten Sammelschiene (7; 107; 207; 307), die zumindest eine erste Teil-Schiene (14; 114; 214; 314) und eine zweite Teil-Schiene (15; 115; 215; 315) aufweist,
- mit zumindest einem Sammelschienenhalter (5), der eine Anlagefläche (13) aufweist, an der die erste Teil-Schiene (14; 114; 214; 314) mittels eines ersten Befestigungsmittels (16) gehalten ist und
- mit zumindest einem zweiten Befestigungsmittel (28) zum Befestigen der zweiten Teil-Schiene (15; 115; 215; 315) an der ersten Teil-Schiene (14; 114; 214; 314),
**dadurch gekennzeichnet ,**
**dass** in der Anlagefläche (13) des Sammelschienenhalters (5) zumindest eine Vertiefung (41) zur Aufnahme des zweiten Befestigungsmittels (28) vorgesehen ist.

2. Sammelschienenanordnung nach Anspruch 1,
**dadurch gekennzeichnet ,**
**dass** die Tiefe (42) der Vertiefungen (41) derart bemessen ist, dass das jeweils zugeordnete zweite Befestigungsmittel (28) zwischen dem Boden der Vertiefung und der ersten Teil-Schiene (14; 114; 214; 314) verliersicher gehalten ist.

3. Sammelschienenanordnung nach einem der Ansprüche 1 oder 2,
**dadurch gekennzeichnet** ,
die Vertiefungen (41) in Richtung der Längsachse des Sammelschienenhalters (5) spiegelsymmetrisch angeordnet sind.

4. Sammelschienenanordnung nach einem der Ansprüche 1 bis 3,
**dadurch gekennzeichnet ,**
**dass** im Bereich zwischen den Vertiefungen (41) Materialverjüngungen (71) vorgesehen sind.

5. Sammelschienenanordnung nach einem der Ansprüche 1 bis 4,
**dadurch gekennzeichnet ,**
**dass** an dem Sammelschienenhalter (5) zumindest die ersten Teil-Schienen (14; 114; 214; 314) einer ersten und einer zweiten Sammelschiene (7, 8; 107, 108; 207, 208; 307, 308) befestigbar sind,
wobei der Sammelschienenhalter (5) und die ersten Teil-Schienen mit ersten Ausnehmungen (21, 20) derart versehen sind, das sie die Befestigung der ersten Teil-Schienen (14; 114; 214; 314) an dem Sammelschienenhalter (5) bei unterschiedlichen lichten Weiten (55; 56)zwischen den Sammelschienen erlauben.

6. Sammelschienenanordnung nach Anspruch 5,
**dadurch gekennzeichnet ,**
**dass** die Ausnehmungen (21) in Richtung der Längsachse des Sammelschienenhalters (5) spiegelsymmetrisch angeordnet sind.

## Claims

1. Busbar arrangement (4; 104; 204; 304),
- having at least one first busbar (7; 107; 207; 307), which has at least one first rail element (14; 114; 214; 314) and a second rail element (15; 115; 215; 315),
- having at least one busbar holder (5), which has a bearing face (13), against which the first rail element (14; 114; 214; 314) is held by means of a first fixing means (16), and
- having at least one second fixing means (28) for the purpose of fixing the second rail element (15; 115; 215; 315) to the first rail element (14; 114; 214; 314),
**characterized in that** at least one depression (41) is provided in the bearing face (13) of the busbar holder (5) for the purpose of accommodating the second fixing means (28).

2. Busbar arrangement according to Claim 1, **characterized in that** the depth (42) of the depressions (41) is dimensioned such that the respectively associated second fixing means. (28) is held between the base of the depression and the first rail element (14; 114; 214; 314) such that it is secured against becoming detached.

3. Busbar arrangement according to either of Claims 1 and 2, **characterized in that** the depressions (41) are arranged in the direction of the longitudinal axis of the busbar holder (5) in mirror-symmetrical fashion.

4. Busbar arrangement according to one of Claims 1 to 3, **characterized in that** tapered sections of material (71) are provided in the region between the depressions (41).

5. Busbar arrangement according to one of Claims 1 to 4, **characterized in that** at least the first rail elements (14; 114; 214; 314) of a first and a second busbar (7, 8; 107, 108; 207, 208; 307, 308) can be fixed to the busbar holder (5), the busbar holder (5) and the first rail elements being provided with first cutouts (21, 20) such that they allow for the first rail elements (14; 114; 214; 314) to be fixed to the busbar holder (5) in the case of different clear widths (55; 56) between the busbars.

6. Busbar arrangement according to Claim 5, **characterized in that** the cutouts (21) are arranged in the direction of the longitudinal axis of the busbar holder (5) in mirror-symmetrical fashion.

## Revendications

1. Système de barres omnibus (4 ; 104 ; 204 ; 304),
- ayant au moins une première barre omnibus (7 ; 107 ; 207 ; 307) qui comprend au moins une première barre partielle (14 ; 114 ; 214 ; 314) et une deuxième barre partielle (15 ; 115 ; 215 ; 315),
- ayant au moins un support (5) de barres omnibus, qui présente une surface d'appui (13) sur laquelle est maintenue la première barre partielle (14 ; 114 ; 214 ; 314) à l'aide d'un premier moyen de fixation (16), et
- ayant au moins un deuxième moyen de fixation (28) pour fixer la deuxième barre partielle (15 ; 115 ; 215 ; 315) sur la première barre partielle (14 ; 114 ; 214 ; 314),
**caractérisé en ce que** dans la surface d'appui (13) du support (5) de barres omnibus est prévu au moins un creux (41) destiné à recevoir ou à loger le deuxième moyen de fixation (28).

2. Système de barres omnibus selon la revendication 1,
**caractérisé en ce que** la profondeur (42) des creux (41) est dimensionnée de façon à ce que le deuxième moyen de fixation (28) respectivement associé soit retenu de manière imperdable entre le fond du creux et la première barre partielle (14 ; 114 ; 214 ; 314).

3. Système de barres omnibus selon l'une des revendications 1 ou 2,
**caractérisé en ce que** les creux (41) sont agencés de manière symétrique comme en un miroir dans la direction de l'axe longitudinal du support (5) de barres omnibus.

4. Système de barres omnibus selon l'une des revendications 1 à 3,
**caractérisé en ce que** dans la zone entre les creux (41) sont prévus des rétrécissements ou réductions d'épaisseur de matériau (71).

5. Système de barres omnibus selon l'une des revendications 1 à 4,
**caractérisé en ce que** sur le support (5) de barres omnibus peuvent être fixées au moins les premières barres partielles (14 ; 114, 214 ; 314) d'une première et d'une seconde barre omnibus (7, 8 ; 107, 108 ; 207, 208 ; 307, 308),
le support (5) de barres omnibus et les premières barres partielles étant pourvues de premiers évidements (21, 20) de façon à permettre la fixation des premières barres partielles (14 ; 114, 214 ; 314) au support (5) de barres omnibus selon différentes distances d'espacement libre (55 ; 56) entre les barres omnibus.

6. Système de barres omnibus selon la revendication 5,
**caractérisé en ce que** les évidements (21) sont disposés de manière symétrique comme en un miroir dans la direction de l'axe longitudinal du support (5) de barres omnibus.
